Europäisches Patentamt

European Patent Office

Office européen des brevets

(19)

(11) Veröffentlichungsnummer: **0 189 805**
**B1**

(12) **EUROPÄISCHE PATENTSCHRIFT**

(45) Veröffentlichungstag der Patentschrift: **06.06.90**

(21) Anmeldenummer: **86100647.6**

(22) Anmeldetag: **18.01.86**

(51) Int. Cl.⁵: **B 23 K 37/04,** B 23 K 11/06,
B 23 K 11/00

(54) Maschine zum Schweissen von Längsnähten an gerundeten Blechgebinde-Zargen.

(30) Priorität: **01.02.85 CH 465/85**

(43) Veröffentlichungstag der Anmeldung:
**06.08.86 Patentblatt 86/32**

(45) Bekanntmachung des Hinweises auf die
Patenterteilung:
**06.06.90 Patentblatt 90/23**

(84) Benannte Vertragsstaaten:
**CH DE FR GB IT LI NL SE**

(56) Entgegenhaltungen:
**FR-A-1 169 817**
**FR-A-2 079 341**
**FR-A-2 304 434**
**US-A-3 150 249**

(73) Patentinhaber: **ELPATRONIC AG**
**Baarerstrasse 117**
**CH-6300 Zug (CH)**

(72) Erfinder: **Weil, Wolfgang**
**Hattsteinstrasse 3**
**D-7843 Heitersheim (DE)**

(74) Vertreter: **Hotz, Klaus, Dipl.-El.-Ing. / ETH**
**c/o SOUDRONIC AG Industriestrasse 35**
**Postfach 11**
**CH-8962 Bergdietikon (CH)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 189 805 B1

**Beschreibung**

Die Erfindung betrifft eine Maschine zum Schweissen von Längsnähten an gerundeten Blechgebinde-Zargen mit

einer inneren und einer äusseren Elektrodenrolle, deren Achsen zumindest annähernd in einer gemeinsamen, zur Achsrichtung der Zarge normalen Ebene liegen,

einem Kranz Kalibrierrollen, deren Achsen ebenfalls zumindest annähernd in der genannten Ebene liegen, wobei eine der Kalibrierrollen der äusseren Elektrodenrolle diametral gegenüber angeordnet und zwangsweise mit einer Umfangsgeschwindigkeit drehantreibbar ist, die auf diejenige der äusseren Elektrodenrolle abgestimmt ist, und

einer Führungsrolle, die in bezug auf die letztgenannte Kalibrierrolle in Achsrichtung der Zargen nach vorne versetzt angeordnet ist.

Bei einer bekannten Maschine dieser Gattung (US-A 3 150 249) ist die der äusseren Elektrodenrolle diametral gegenüber angeordnete Kalibrierrolle über ein Getriebe mit stufenlos einstellbarem Uebersetzungsverhältnis mit einem Motor verbunden, von dem sie mit einer Umfangsgeschwindigkeit angetrieben wird, die ebenso gross oder etwas grösser ist als diejenige der Elektroden rollen. Die Führungsrolle ist jedoch nicht angetrieben, so dass sie sich nur dann dreht, wenn sie von einer Zarge in Bewegung versetzt wird. Zwischen der genannten Kalibrierrolle und der Führungsrolle besteht keinerlei Führung oder Abstützung für die Zargen. Bei dieser bekannten Maschine besteht die Gefahr, dass die Zargen während des Schweissens oder bei ihrer Uebergabe an eine nachgeordnete Vorrichtung in störende Schwingungen geraten.

Solche unerwünschten Schwingungen können vor allem dann auftreten, wenn mit Drahtelektroden gearbeitet wird, die um die Elektrodenrollen herumgeführt sind, um zu verhindern, dass diese das Blech der Zargen, insbesondere Weissblech, unmittelbar berühren und dadurch verschmutzt werden. Erfahrungsgemäss längen sich die Drahtelektroden unter der Einwirkung der hohen Drücke und Temperaturen beim Schweissen; diese Längung der Drahtelektroden ist an den beiden Elektrodenrollen im allgemeinen nicht genau gleich gross, sondern im Bereiche der äusseren Elektrodenrolle meist etwas grösser mit der Folge, dass Momente auftreten, die dazu neigen, die Zargen zu kippen.

Vor allem wenn die Zargenhöhe im Verhältnis zum Zargendurchmesser klein ist und/oder die Schweissgeschwindigkeit grösser ist, können die Zargen in Schwingungen geraten, die sich nachteilig auf die Qualität der Längsnähte auswirken. Schwingungen der Zargen im Bereich der Elektrodenrollen haben sich als besonders nachteilig erwiesen, wenn die beim Schweissen von Längs-Quetschnähten auftretenden Geschwindigkeiten, Kräfte und Stromstärken ständig überwacht und in eine automatische Regeleinrichtung eingegeben werden. In solchen Fällen können sich den Messwerten Signale überlagern, die von mechanischen Schwingungen der Zargen hervorgerufen werden und ihrerseits in der Regeleinrichtung Schwingungen erregen, die zu fehlerhaften Regelzuständen und in deren Folge zu mangelhaften Schweissnähten führen können.

Der Erfindung liegt deshalb die Aufgabe zugrunde, eine Maschine der eingangs beschriebenen Gattung, insbesondere eine mit Drahtelektroden arbeitende Maschine zum Schweissen von Längs-Quetschnähten, derart weiterzubilden, dass Schwingungen der Zargen im Bereich der Elektrodenrollen wirksamer als bisher entgegengewirkt wird, und dementsprechend hohe Schweissgeschwindigkeiten selbst bei Zargen mit verhältnismässig geringer Zargenhöhe zugelassen werden können.

Die Aufgabe ist erfindungsgemäss dadurch gelöst, dass die Führungsrolle mit der letztgenannten Kalibrierrolle durch ein beide umschlingendes, endloses Förderelement verbunden ist. Erfindungsgemäss wird die Führungsrolle also nicht mehr wie bisher von den auf sie auflaufenden Zargen in Drehung versetzt, sondern durch den gleichen Antrieb, von dem auch die genannte Kalibrierrolle angetrieben wird. Das endlose Förderelement überträgt auf seiner gesamten Länge zwischen der Führungsrolle und der genannten Kalibrierrolle definierte Mitnahmekräfte auf die Zargen und stabilisiert dadurch deren Bewegung. Das endlose Förderelement kann beispielsweise ein handelsüblicher Treibriemen oder Schnurtrieb mit einer oder mehreren Rundschnüren od. dgl. sein.

Die Erfindung kann dadurch weitergebildet sein, dass das Förderelement zwischen den beiden Rollen, die es umschlingt, an einer ebenen Plattform abgestützt ist. Die Plattform bietet Gewähr dafür, dass das Förderelement im gesamten Zwischenraum zwischen den beiden von ihm umschlungenen Rollen im wesentlichen gleichmässig an den Zargen anliegt, um auf diese eine definierte, nach vorn gerichtete Kraft auszuüben.

Gemäss einem weiteren Merkmal der Erfindung kann zwischen dem Kranz Kalibrierrollen und der Führungsrolle ein Magnet angeordnet sein, der die Zargen zur Führungsrolle hinzieht. Dieser Magnet kann mit der zuvor beschriebenen Plattform dadurch kombiniert sein, dass die Plattform selbst magnetisierbar ist.

Das Förderelement ist vorzugsweise mit einer Geschwindigkeit antreibbar, die von der Umfangsgeschwindigkeit der äusseren Elektrodenrolle um bis zu 1 % nach oben oder unten abweicht. Durch Geschwindigkeitsunterschiede in dieser Grössenordnung lassen sich unerwünschte Kippmomente, die von den Elektrodenrollen auf die Zargen ausgeübt werden können, im allgemeinen vollständig ausgleichen.

Schliesslich ist es vorteilhaft, wenn die Führungsrolle von einem Servomotor angetrieben ist, der entsprechend den Signalen eines mit der äusseren Elektrodenrolle umlaufenden Drehwinkelgebers gesteuert ist.

Ein Ausführungsbeispiel der Erfindung wird im

2

folgenden anhand schematischer Zeichnungen mit weiteren Einzelheiten erläutert. Es zeigt.

Fig. 1 die Schweisszone einer Maschine zum Herstellen von Blechgebinde-Zargen in Schrägansicht,

Fig.2 die entsprechende Ansicht von vorne, teilweise im Schnitt in der senkrechten Querebene II-II in Fig.3;

Fig.3 die zu Fig.2 gehörige Seitenansicht, teilweise im Schnitt in der senkrechten Längsebene III-III in Fig.2.

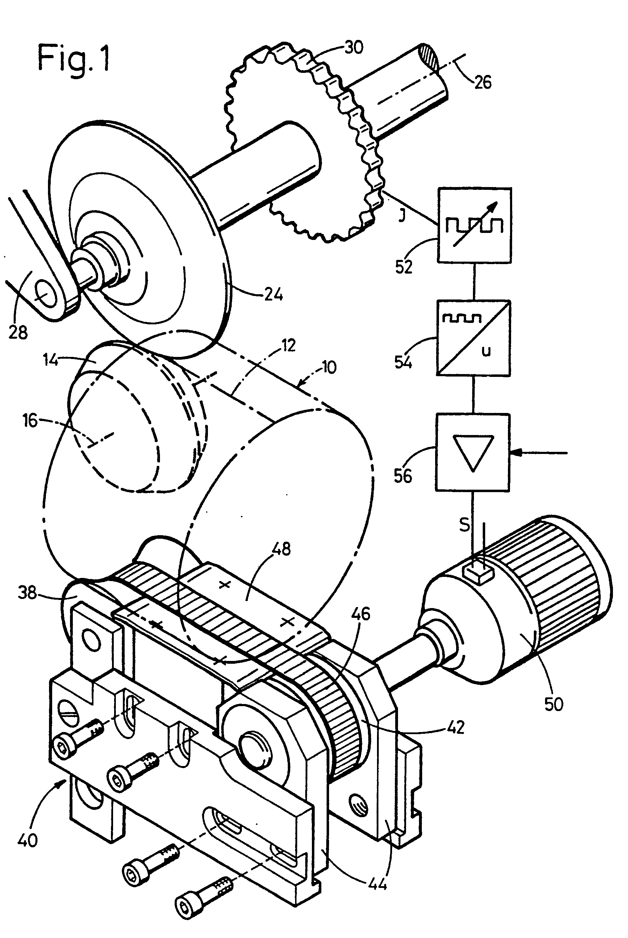

In Fig.1 bis 3 sind von einer Maschine zum Herstellen von Zargen 10 aus Blech mit einer geschweißten Längs-Quetschnaht 12 nur diejenigen Teile dargestellt, in deren Bereich erfindungsgemäße Maßnahmen vorgesehen sind; die Gestaltung einer solchen Maschine im übrigen ist aus dem eingangs genannten Prospekt sowie beispielsweise aus der DE-AS 2 532 976 bekannt; auf diese Druckschriften wird hiermit wegen weiterer Einzelheiten verwiesen.

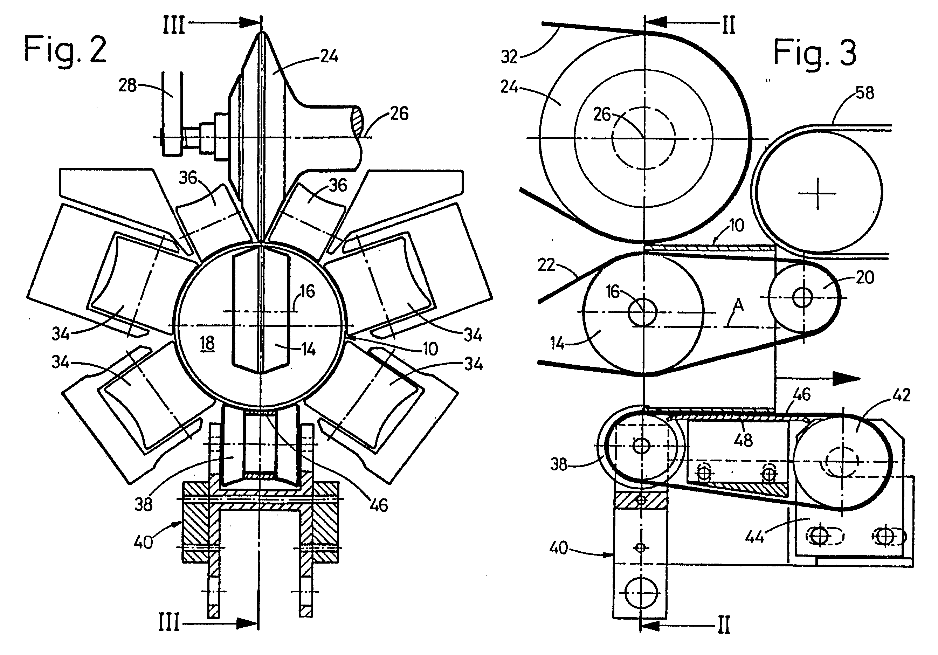

Die Zargen 10 werden mit nicht dargestellten Fördermitteln in gerundetem Zustand zugeführt; in Fig.1 und 3 von links nach rechts und in Fig.2 dem Betrachter entgegen. In Fig.1 und 3 ist eine solche Zarge 10 in einem Augenblick dargestellt, in welchem ihre Längsnaht 12 vollendet ist, es handelt sich um eine durch elektrisches Widerstandsschweißen hergestellte Quetschnaht, die zwei einander überlappende Längsränder der Zarge miteinander verbindet.

Beim Schweißen der Längsnaht 12 wird jede einzelne Zarge 10 über eine innere Elektrodenrolle 14 geschoben, die um eine ortsfeste Achse 16 frei drehbar an einem ebenfalls ortsfesten Arm 18 gelagert ist. Der Arm 18 ragt in üblicher Weise von einem nicht dargestellten Maschinengestell weg; die Zargen werden nacheinander durch Runden ursprünglich ebener Blechplatinen um diesen Arm herum gebildet.

In einem Abstand vor der inneren Elektrodenrolle 14 ist eine Umlenkrolle 20 angeordnet; diese beiden Rollen werden von einer inneren Drahtelektrode 22 umschlungen, die in üblicher Weise synchron mit den Zargen 10 bewegt wird.

Der inneren Elektrodenrolle 14 ist eine äußere Elektrodenrolle 24 größeren Durchmessers zugeordnet, die um eine Achse 26 drehbar an einem Hebel 28 gelagert ist. Der Hebel 28 ist in üblicher Weise derart belastbar, daß die äußere Elektrodenrolle 24 bestrebt ist, sich der inneren Elektrodenrolle 14 zu nähern. Die äußere Elektrodenrolle 24 ist mit einem Drehwinkelgeber 30 verbunden und von einer äußeren Drahtelektrode 32 umschlungen, die ebenfalls synchron mit den Zargen 10 bewegbar ist. Die beiden Drahtelektroden 22 und 32 sind von einem gemeinsamen Kupferdraht von ursprünglich rundem Querschnitt gebildet, der an anderer, nicht dargestellter Stelle der Maschine flachgewalzt wird und nacheinander über die äußere Elektrodenrolle 24 und dann über die innere Elektrodenrolle 14 läuft.

Die Achsen 16 und 26 der beiden Elektrodenrollen 14 und 24 liegen übereinander in je einer waagerechten Ebene und sind in bezug auf die senkrechte Ebene II-II, welche die Zeichnungsebene der Fig.2 ist, um einen sehr kleinen Winkel in der Größenordnung von je 0,5° geneigt; im vorliegenden Zusammenhang kann die Ebene II-II jedoch näherungsweise als die gemeinsame Ebene der beiden Achsen 16 und 26 bezeichnet werden.

Zumindest ungefähr in der Ebene II-II ist ein Kranz Kalibrierrollen angeordnet, der aus zwei Paar seitlichen Kalibrierrollen 34, einem paar oberen Kalibrierrollen 36 und einer unteren Kalibrierrolle 38 besteht. Die Achsen sämtlicher Kalibrierrollen liegen entweder unmittelbar in oder in geringem Abstand parallel zu der Ebene II-II. Die seitlichen Kalibrierrollen 34 sind in bezug zur Achsrichtung A der Zargen 10 radial federnd abgestützt. Die beiden oberen Kalibrierrollen 36 sind unmittelbar neben der äußeren Elektrodenrolle 24 angeordnet und starr gelagert. Die untere Kalibrierrolle 38 ist an einer Konsole 40 gelagert, die in bezug zur Achsrichtung A der Zargen 10 sowie in bezug zu den Achsen 16 und 26 der Elektrodenrollen 14 und 24 radial federnd abgestützt ist, wie ebenfalls aus den genannten Druckschriften bekannt.

Die Konsole 40 erstreckt sich parallel zur Achsrichtung A nach vorne und trägt eine Führungsrolle 42, die in einem Lagerbock 44 in einstellbarem Abstand von der unteren Kalibrierrolle 38 gelagert ist. Sämtliche Kalibrierrollen 34, 36 und 38 sowie die Führungsrolle 42 sind diaboloartig gestaltet.

Die untere Kalibrierrolle 38 und die Führungsrolle 42 sind außerdem mittig genutet und gemeinsam von einem endlosen Förderelement 46 umschlungen, das im dargestellten Beispiel von einem elastischen Treibriemen gebildet ist. Das obere Trum des Förderelements 48 liegt auf einer ebenen, waagerechten Plattform 48 auf, die zwischen der unteren Kalibrierrolle 38 und der Führungsrolle 42 höheneinstellbar befestigt ist. Auf diese Weise ist das obere Trum des Förderelements 46 zwischen der unteren Kalibrierrolle 38 und der Führungsrolle 42 derart eben und waagerecht gehalten, daß es jede einzelne Zarge 10 längs einer der Längsnaht 12 diametral gegenüberliegenden Mantellinien abstützt.

Das Förderelement 46 ist von einem mit der Führungsrolle 42 unmittelbar gekuppelten Servomotor 50 mit einer Geschwindigkeit antreibbar, die mit der Umfangsgeschwindigkeit der über die äußere Elektrodenrolle 24 laufenden Drahtelektrode 22 mehr oder weniger genau übereinstimmt, wobei Abweichungen von 1% nach oben oder unten von Fall zu Fall zweckmäßig sein können. Der Servomotor 50 wird dadurch geregelt, daß der Drehwinkelgeber 30 Signale entsprechend der Winkelgeschwindigkeit der äußeren Elektrodenrolle 24 als 1st-Signale ????? über einen Frequenzanalysator 52 und einen Frequenz/ Spannungswandler 54 an einen Komparator 56 abgibt, der diese 1st-Signale ????? mit Soll-Signalen S vergleicht und entsprechende Ausgangssignale an den Servomotor 50 abgibt.

Im übrigen ist in Fig. 3 noch angedeutet, wie über ein weiteres Transportsystem 58 die Blechgebinde-Zargen 10 zu einer nicht dargestellten Verarbeitungsstation transportiert werden.

## Patentansprüche

1. Maschine zum Schweissen von Längsnähten (12) an gerundeten Blechgebinde-Zargen (10) mit einer inneren und einer äusseren Elektrodenrolle (14, 24), deren Achsen (16, 26) zumindest annähernd in einer gemeinsamen, zur Achsrichtung (A) der Zarge (10) normalen Ebene (II-II) liegen,

einem Kranz Kalibrierrollen (34, 36, 38), deren Achsen ebenfalls zumindest annähernd in der genannten Ebene (II-II) liegen, wobei eine der Kalibrierrollen (38) der äusseren Elektrodenrolle (24) diametral gegenüber angeordnet und zwangsweise mit einer Umfangsgeschwindigkeit drehantreibbar ist, die auf diejenige der äusseren Elektrodenrolle (24) abgestimmt ist, und

einer Führungsrolle (42), die inbezug auf die letztgenannte Kalibrierrolle (38) in Achsrichtung (A) der Zargen (10) nach vorne versetzt angeordnet ist,

dadurch gekennzeichnet, dass die Führungsrolle (42) mit der letztgenannten Kalibrierrolle (38) durch ein beide umschlingendes, endloses Förderelement (46) verbunden ist.

2. Maschine nach Anspruch 1, dadurch gekennzeichnet, dass das Förderelement (46) zwischen den beiden Rollen (38, 42), die es umschlingt, an einer ebenen Plattform (48) abgestützt ist.

3. Maschine nach Anspruch 1, dadurch gekennzeichnet, dass zwischen dem Kranz Kalibrierrollen (34, 36, 38) und der Führungsrolle (42) ein Magnet angeordnet ist, der die Zargen (10) zur Führungsrolle (42) hinzieht.

4. Maschine nach Anspruch 2 und 3, dadurch gekennzeichnet, dass die Plattform (48) selbst magnetisch ist.

5. Maschine nach Anspruch 1, dadurch gekennzeichnet, dass das Förderelement (46) mit einer Geschwindigkeit antreibbar ist, die von der Umfangsgeschwindigkeit der äusseren Elektrodenrolle (24) um bis zu 1 % nach oben oder unten abweicht.

6. Maschine nach einem der Ansprüche 1 bis 5, dadurch gekennzeichnet, dass die Führungsrolle (42) von einem Servomotor (50) angetrieben ist, der entsprechend den Signalen eines mit der äusseren Elektrodenrolle (24) umlaufenden Drehwinkelgebers (30) gesteuert ist.

## Revendications

1. Machine à souder les cordons longitudinaux (12) de corps de boîtes cintrés (10) en tôle comportant

une molette d'électrode intérieure (14) et une molette d'électrode extérieure (24) dont les axes (16, 26) se situent au moins à peu près dans un plan commun (II-II) normal à la direction axiale (A) des corps de boîtes (10),

une couronne de rouleaux de calibrage (34, 36, 38) dont les axes se situent aussi au moins à peu près dans le plan cité (II-II), l'un des rouleaux de calibrage (38) de la molette d'électrode extérieure (24) étant diamétralement opposé et entraîné par force en rotation à une vitesse périphérique qui est adaptée à celle de la molette d'électrode extérieure (24), et

un rouleau de guidage (42) qui est disposé décalé vers l'avant par rapport au dernier rouleau de calibrage (38) cité dans la direction axiale (A) des corps de boîtes,

caractérisée en ce que le rouleau de guidage (42) est relié au dernier rouleau de calibrage (38) cité par un élément de transport (46) sans fin entourant les deux rouleaux.

2. Machine selon la revendication 1, caractérisée en ce que l'élément de transport (46) prend appui contre une plate-forme (48) plane entre les deux rouleaux (38, 42) qui l'entourent.

3. Machine selon la revendication 1, caractérisée en ce qu'on dispose un aimant entre la couronne de rouleau de calibrage (34, 36, 38) et le rouleau de guidage (42), pour attirer les corps de boîtes (10) vers le rouleau de guidage (42).

4. Machine selon les revendications 2 et 3, caractérisée en ce que la plate-forme (48) est elle-même magnétique.

5. Machine selon la revendication 1, caractérisée en ce que l'élément de transport (48) est entraîné à une vitesse qui diffère de plus ou moins un pour cent par rapport à la vitesse périphérique de la molette d'électrode extérieure (24).

6. Machine selon l'une des revendications 1 à 5, caractérisée en ce que le rouleau de guidage (42) est entraîné par un servomoteur (50) qui est entraîné suivant les signaux engendrés par un capteur d'écart angulaire (30) tournant avec la molette d'électrode extérieure (24).

## Claims

1. A machine for welding longitudinal seams (12) on rounded sheet-metal container body blanks (10) having

an inner and an outer electrode roller (14, 24), the axes (16, 26) of which lie at least substantially in a common plane (II-II) normal to the direction (A) of the axis of the body blank (10),

a ring of sizing rollers (34, 36, 38), the axes of which likewise lie at least substantially in the said plane (II-II), one of the sizing rollers (38) being disposed diametrically opposite to the outer electrode roller (24) and being able to be positively driven in rotation at a circumferential speed which is matched to that of the outer electrode roller (24), and

a guide roller (42) which is arranged offset forwards in the direction (A) of the axis of the body blanks (10) in relation to the last-mentioned sizing roller (38),

characterised in that the guide roller (42) is connected to the last-mentioned sizing roller (38) by an endless conveyor element (46) wrapped round both.

2. A machine according to Claim 1, characterised in that the conveyor element (46) is supported on a plane platform (48) between the two rollers (38, 42) round which it is wrapped.

3. A machine according to Claim 1, characterised in that, disposed between the ring of sizing rollers (34, 36, 38) and the guide roller (42) is a magnet which pulls the body blanks (10) towards the guide roller (42).

4. A machine according to Claims 2 and 3, characterised in that the platform (48) itself is magnetic.

5. A machine according to Claim 1, characterised in that the conveyor element (46) can be driven at a speed which deviates by up to 1% upwards or downwards from the circumferential speed of the outer electrode roller (24).

6. A machine according to any one of Claims 1 to 5, characterised in that the guide roller (42) is driven by a servomotor (50) which is controlled according to the signals of an angle-of-rotation transmitter (30) rotating with the outer electrode roller (24).

EP 0 189 805 B1

Fig.1

1

EP 0 189 805 B1

Fig. 3

Fig. 2

2